# EUROPÄISCHE PATENTSCHRIFT

(11) **EP 2 125 612 B1**
(45) Veröffentlichungstag und Bekanntmachung des Hinweises auf die Patenterteilung: **30.03.2011**
(21) Anmeldenummer: 08701458.5
(22) Anmeldetag: 14.01.2008
(51) Int. Cl.: C01B 17/16, B01J 8/00, B01J 8/06, B01J 10/00, B01J 19/00, B01J 19/24

(54) **REAKTOR UND VERFAHREN ZUR HERSTELLUNG VON SCHWEFELWASSERSTOFF**
REACTOR AND METHOD FOR THE PRODUCTION OF HYDROGEN SULFIDE
RÉACTEUR ET PROCÉDÉ DE PRODUCTION D'ACIDE SULFHYDRIQUE

(30) Priorität: 16.01.2007 EP 07100589
(43) Veröffentlichungstag der Anmeldung: 02.12.2009
(73) Patentinhaber: BASF SE, 67056 Ludwigshafen (DE)
(72) Erfinder: WOELFERT, Andreas, 74906 Bad Rappenau (DE); JACHOW, Harald, 64625 Bensheim (DE); DRIESS, Heinz, 67071 Ludwigshafen (DE)
(86) Internationale Anmeldenummer: PCT/EP2008/050333
(87) Internationale Veröffentlichungsnummer: WO 2008/087110

(56) Entgegenhaltungen:
- WO-A-99/46037
- WO-A-99/50235
- DE-B- 1 113 446
- GB-A- 598 885
- US-A- 2 474 066
- US-A- 2 687 948
- US-A- 2 965 455
- US-A- 4 233 269

## Beschreibung

Die vorliegende Erfindung betrifft einen Reaktor und ein Verfahren zur kontinuierlichen Herstellung von H₂S durch Umsetzung von gasförmigem Wasserstoff und Schwefel an einem Katalysator.

Die Herstellung von Schwefelwasserstoff erfolgt im Stand der Technik z.B. durch das H₂S-Verfahren nach Girdler (Ullmann's Encyclopedia of Industrial Chemistry, Sixth Edition, 2003, Vol. 17, Seite 291). H₂S wird dabei unkatalytisch aus den Elementen Schwefel und Wasserstoff in einer Kolonne mit Einbauten und einem im Wesentlichen horizontal ausgerichteten, erweiterten Sumpf hergestellt. In den mit siedendem Schwefel gefüllten Sumpf wird Wasserstoff eingeleitet, welcher Schwefel in die aufsteigende Gasphase strippt. Wasserstoff und aufsteigender Schwefel reagieren im Gasraum der Kolonne, wobei die dabei freiwerdende Reaktionswärme dem Produktgas durch Wäsche mit flüssigem Schwefel entzogen wird. Dazu wird aus dem Sumpf der Kolonne flüssiger Schwefel abgezogen, mit frischem, kaltem Schwefel gemischt und am Kopf der Kolonne aufgegeben. Das Produktgas, das weitgehend Schwefelwasserstoff enthält, wird in zwei Wärmetauschern abgekühlt. Als nachteilig erweist sich, dass das Verfahren unter Druck und bei erhöhter Temperatur durchgeführt werden muss. Die erhöhte Temperatur führt zu verstärkten Korrosionsraten und Materialabtrag an den Reaktorwänden. Im Falle einer Leckage treten aufgrund des erhöhten Drucks größere Mengen an giftigem H₂S aus.

Eine katalytische Herstellung von H₂S wird in Angew. Chem.; 74 Jahrgang 1962; Nr. 4; Seite 151 beschrieben. Dabei wird Wasserstoff durch ein von außen temperiertes Schwefelbad geleitet. Der mit Schwefeldampf beladene Wasserstoff tritt durch Bohrungen in einen Katalysatorraum ein. Nicht abreagierter Schwefel wird nach Verlassen des Katalysatorraums in einem oberen Teil des H₂S-Auslassrohres kondensiert und gelangt über ein Rücklaufrohr in das Schwefelbad zurück. Der Katalysatorraum ist konzentrisch um das H₂S-Auslassrohr angeordnet. Nachteilig bei dem Verfahren in technischem Maßstab ist, dass die Reaktionswärme nicht zur Erwärmung des Schwefelbads genutzt wird, sondern die Erwärmung über den Mantel des Schwefelbads erfolgt.

Aus DE 1 113 446 ist die katalytische Herstellung von Schwefelwasserstoff durch Umsetzung eines stöchiometrischen Gemisches von Wasserstoff und Schwefel an einem Kobalt- und Molybdänsalz auf einem Träger enthaltenden Katalysator bei Temperaturen zwischen 300 und 400°C bekannt. Der Katalysator ist hierbei in Rohren angeordnet, die von dem Gemisch von Wasserstoff und Schwefel durchströmt werden. Das Schwefelbad hat eine Temperatur von 340 bis 360°C, wodurch eine stöchiometrische Mischung von Wasserstoff und Schwefel durch Durchleiten von Wasserstoff durch das Schwefelbad für die Herstellung von H₂S erzeugt wird. Die bei der H₂S-Bildung freiwerdende Reaktionswärme wird durch direkten Wärmeaustausch genutzt, da die den Katalysator enthaltenden Rohre im Schwefelbad auf eine nicht näher beschriebene Art angeordnet sind.

In US 2,863,725 wird ein Verfahren zur Herstellung von H₂S an einem Molybdän enthaltenden Katalysator beschrieben, wobei gasförmiger Wasserstoff in einen eine Schwefelschmelze enthaltenden Reaktor eingeleitet wird und durch die Schwefelschmelze in Form von Gasblasen aufsteigt. Die Menge an eingeleitetem Wasserstoff und die Temperatur der Schwefelschmelze, angegeben wird eine Temperatur unter 326°C, werden derart eingestellt, dass ein sich oberhalb der Schwefelschmelze in einer Gaszone ausbildendes Gasgemisch die Edukte Wasserstoff und Schwefel mit einem Überschuss an Wasserstoff über dem stöchiometrischen Reaktionsverhältnis enthält.

Dieser Reaktor, der auch in US 2,965,455 beschrieben ist, ist ein Rohrbündelreaktor, der durch eine Unterteilung in einen oberen Reaktorbereich und einen unteren Sammelbereich gegliedert ist. Der obere Reaktorbereich ist teilweise mit der Schwefelschmelze gefüllt und oberhalb der Schwefelschmelze-sammeln sich die Edukte in der Gaszone, die in offener Verbindung mit den oberen Enden der Rohre des Rohrbündels steht. In den Rohren ist ein Molybdän-Katalysator angeordnet, an dem die Reaktion zu H₂S in der Gasphase stattfindet. Das Gasgemisch der Edukte tritt in die Rohre an deren oberen Enden ein, durchströmt diese von oben nach unten, wobei es an dem Katalysator umgesetzt wird und verlässt als Produkt enthaltendes Gas die Rohre an ihren unteren Enden, welche in offener Verbindung mit dem Sammelbereich des Reaktors stehen. Durch die Anordnung der Rohre innerhalb der Schwefelschmelze kann ein Wärmeaustausch der bei der Reaktion freiwerdenden Reaktionswärme mit der die Rohre umgebenden Schwefelschmelze stattfinden. Die Kontaktrohre sind mit der Unterteilung an ihren unteren Enden verbunden, wobei integral ein Element zum Tragen des Katalysators an der Unterteilung vorgesehen ist. Als problematisch erweisen sich die jeweiligen Verbindungsstellen zwischen Unterteilung und den Kontaktrohren, die sowohl thermischen als auch mechanischen-Belastungen ausgesetzt sind und somit gefährdete Bereiche darstellen. Die Befestigung der Rohre nur an ihrem unteren Ende an der Unterteilung führt zu Stabilitätsproblemen.

Eine weitere Problematik zeigt sich bei der Einleitung von Wasserstoff nahe der Unterteilung in einen unteren Bereich der Schwefelschmelze über ein perforiertes Einleitrohr. Flüssiger Schwefel kann in die Perforationen des Einleitrohres, insbesondere in einer Anfahrphase des Verfahrens, eindringen und sich bei entsprechender Temperatur derart verfestigen, dass eine Hemmung oder eine Verstopfung entsteht. Daraus resultiert eine unzureichende Wasserstoffeinspeisung, so dass die Menge an aus der Schwefelschmelze durch den Wasserstoff gestripptem Schwefel zu gering für das angestrebte Molverhältnis der katalysierten Reaktion ist.

Ein allgemeines Problem für die Konstruktion und Materialauswahl eines Reaktors zur Durchführung des Herstellungsverfahrens von Schwefelwasserstoff stellen die durch Temperaturerhöhung bzw. Temperaturreduzierung während Anfahr- bzw. Abfahrphasen des Verfahrens verursachten thermischen Längenänderungen der verwendeten Materialien dar, die für die einzelnen Konstruktionselemente unterschiedlich sein können. Eine Möglichkeit zum Lösen dieses Problems besteht in der Integration von Kompensatoren, beispielsweise eines metallischen Faltenbalgs in den Reaktormantel, wodurch einzelne thermische Längenänderungen aufgefangen werden können. Allerdings sind diese Kompensatoren häufig die Orte von auftretenden Leckagen. Des Weiteren müssen für die Materialien der einzelnen Elemente die hochkorrosiven Eigenschaften des Schwefelwasserstoffes, insbesondere ausgeprägt bei hohen Temperaturen, beachtet werden, wodurch die Konstruktion eines Reaktors zur Herstellung von Schwefelwasserstoff hohe Materialkosten verursacht.

Aufgabe der vorliegenden Erfindung ist es demnach einen Reaktor und ein Verfahren bereitzustellen, die die Nachteile des Standes der Technik vermeiden und durch die insbesondere die kontinuierliche Herstellung von Schwefelwasserstoff effizienter, energetisch verbessert und ökonomischer wird.

Die Lösung der Aufgabe geht aus von einem Reaktor zur kontinuierlichen Herstellung von H₂S durch Umsetzung eines Eduktgemischs, welches im Wesentlichen gasförmigen Schwefel und Wasserstoff enthält, an einem Katalysator, wobei der Reaktor eine Schwefelschmelze in einem unteren Teil des Reaktors umfasst, in welche mittels einer Zuführeinrichtung gasförmiger Wasserstoff eingeleitet werden kann. Der Katalysator ist (vorzugsweise als Festbett) in mindestens einem U-förmigen Rohr angeordnet, welches teilweise in Kontakt mit der Schwefelschmelze steht, wobei das mindestens eine U-förmige Rohr mindestens eine oberhalb der Schwefelschmelze angeordnete Eintrittsöffnung in einem Schenkel aufweist, durch die das Eduktgemisch aus einem Eduktbereich des Reaktors in das U-förmige Rohr eintreten kann, einen Strömungsweg innerhalb des mindestens einen U-förmigen Rohrs aufweist, entlang dessen das Eduktgemisch in einem Reaktionsbereich umgesetzt werden kann, in dem der Katalysator angeordnet ist, und das mindestens eine U-förmige Rohr mindestens eine Austrittsöffnung in einem anderen Schenkel aufweist, durch die ein Produkt in einen (von dem Eduktbereich getrennten) Produktbereich austreten kann.

Der Reaktor umfasst vorzugsweise einen zylinder- oder prismenförmigen zentralen Körper, umgeben von einem Reaktormantel, der an beiden Enden durch je eine Haube geschlossen ist. Die Hauben können jede geeignete Form aufweisen, beispielsweise halbkugelförmig oder konisch ausgebildet sein.

Der Reaktor ist in einem unteren Teil mit einer Schwefelschmelze gefüllt. In die Schwefelschmelze kann über eine Zuführeinrichtung gasförmiger Wasserstoff eingeleitet werden, wobei sich oberhalb der Schwefelschmelze ein Eduktgemisch enthaltend im Wesentlichen gasförmigen Schwefel und gasförmigen Wasserstoff in einem Eduktbereich sammelt, der mit der Schwefelschmelze über eine Phasengrenze in Kontakt steht und der nach oben vorzugsweise durch eine Unterteilung, beispielsweise durch einen Boden, begrenzt wird. In einer bevorzugten Ausführungsform der vorliegenden Erfindung ist der Boden in einem oberen Teil des Reaktors mit dem Reaktormantel verbunden, bevorzugt im oberen Drittel, besonders bevorzugt im oberen Viertel des Reaktorinnenraums.

In dem erfindungsgemäßen Reaktor ist mindestens ein U-förmiges Rohr vorgesehen, das zumindest teilweise in Kontakt mit der Schwefelschmelze steht. Der Reaktor ist daher als eine Art Rohrbündelreaktor ausgebildet, mit Kontaktrohren, die erfindungsgemäß U-förmig gestaltet sind. Ein solches U-förmiges Rohr weist zwei Schenkel auf, die an ihren unteren Enden durch einen bogenförmigen Bereich miteinander verbunden sind. Die U-förmigen Rohre können jeweils unterschiedlich lange oder vorzugsweise gleich lange Schenkel aufweisen. Die U-förmigen Rohre können z.B. einen Schenkeldurchmesser zwischen 2 und 20 cm, insbesondere zwischen 2,5 und 15 cm, besonders bevorzugt zwischen 5 und 8 cm aufweisen. Das mindestens eine U-förmige Rohr ist vorzugsweise senkrecht in dem Reaktor angeordnet, wobei sich der bogenförmige Bereich unten und die beiden Enden der Schenkel oben befinden.

In dem Zusammenhang mit der vorliegenden Erfindung bedeutet "in Kontakt stehen", dass ein Wärmeaustausch zwischen der Schwefelschmelze und dem Innenraum des Rohrs über die Wandung des Rohrs stattfinden kann. Das mindestens eine U-förmige Rohr taucht vorzugsweise teilweise in die Schwefelschmelze ein.

Innerhalb des mindestens einen U-förmigen Rohrs ist ein Katalysator zur Umsetzung von Wasserstoff und Schwefel zu H₂S angeordnet, wodurch ein Reaktionsbereich bereitgestellt wird. Als Reaktionsbereich wird im Zusammenhang mit der vorliegenden Erfindung derjenige Bereich innerhalb der U-förmigen Rohre bezeichnet, in dem sich der Katalysator befindet. Die Umsetzung der Edukte erfolgt hauptsächlich in dem Reaktionsbereich, der den Katalysator enthält. Die Bereitstellung eines Reaktionsbereichs in U-förmigen Rohren erlaubt eine bzgl. der Reaktorlänge kompakte Bauweise des Reaktors, da der zur Umsetzung von Wasserstoff mit Schwefel zu H₂S vorgesehene Reaktionsbereich auf beide Schenkel je eines U-förmigen Rohrs aufgeteilt werden kann. Durch Einsatz des Katalysators kann die Umsetzung zu H₂S bei moderaten Temperaturen und bei niedrigem Druck durchgeführt werden. Der Katalysator ist vorzugsweise in Form eines geschütteten Festbettes in dem mindestens einen U-förmigen Rohr angeordnet. Geeignete Katalysatoren sind beispielsweise Kobalt und Molybdän enthaltende Katalysatoren auf einem Träger, die als Formkörper beliebiger Gestalt eingesetzt werden. Beispielsweise beträgt der Durchmesser der Formkörper 2 bis 12 mm, insbesondere zwischen 3 und 10 mm, besonders bevorzugt zwischen 4 und 8 mm und die Länge liegt vorzugsweise zwischen 2 und 12 mm, insbesondere zwischen 3 und 10 mm, besonders bevorzugt zwischen 4 und 8 mm.

Bei der Herstellung von Schwefelwasserstoff in dem erfindungsgemäßen Reaktor tritt das Eduktgemisch aus dem Eduktbereich in einen Schenkel des mindestens einen U-förmigen Rohrs durch mindestens eine Eintrittsöffnung ein. Die Eintrittsöffnung ist in einem Schenkel des mindestens einen U-förmigen Rohres oberhalb der Schwefelschmelze angeordnet. Die Eintrittsöffnung mündet aus dem Eduktbereich in den einen Schenkel des U-förmigen Rohrs. Der Abstand zwischen der Phasengrenze der Schwefelschmelze und der Eintrittsöffnung des U-förmigen Rohrs wird so gewählt, dass möglichst wenig flüssiger Schwefel in Form von Tröpfchen mit dem Strom des Eduktgemischs in den Innenraum der U-förmigen Rohre mitgerissen wird. Der Abstand zwischen Eintrittsöffnung und Phasengrenze der Schwefelschmelze liegt vorzugsweise zwischen 0,3 und 3 m, insbesondere zwischen 0,6 und 2,5 m, besonders bevorzugt zwischen 0,9 und 2 m.

Bei der Herstellung von Schwefelwasserstoff in dem erfindungsgemäßen Reaktor durchströmt das Eduktgemisch das U-förmige Rohr entlang eines Strömungsweges, d.h. es durchströmt zunächst nach dem Eintritt durch die Eintrittsöffnung einen Schenkel des U-förmigen Rohres von oben nach unten, tritt durch den bogenförmigen Bereich des U-förmigen Rohrs in den zweiten Schenkel ein und durchströmt anschließend den zweiten Schenkel von unten nach oben. Das Eduktgemisch wird hauptsächlich in dem Reaktionsbereich, der innerhalb des U-förmigen Rohres enthalten ist, an dem dort angeordneten Katalysator umgesetzt. Durch eine Austrittsöffnung in dem zweiten Schenkel des U-förmigen Rohrs tritt das das Produkt enthaltende Gas in einen (vorzugsweise oberhalb der Schwefelschmelze und oberhalb des Eduktbereichs in dem Reaktor angeordneten) Produktbereich ein, der von dem Eduktbereich (z.B. durch einen Boden) getrennt ist.

Dem Reaktor wird über eine geeignete Zuführeinrichtung gasförmiger Wasserstoff und flüssiger Schwefel zugeführt. An geeigneter Stelle wird das Produkt Schwefelwasserstoff, beispielsweise an einer oberen Haube, aus dem Produktbereich des Reaktors geleitet.

Die beiden Schenkel eines U-förmigen Rohres sind vorzugsweise jeweils an ihrem oberen Ende mit einem Boden des Reaktors verbunden, der wiederum in einem oberen Teil des Reaktors an dem Reaktormantel in geeigneter Weise befestigt ist. Der Boden unterteilt den Reaktor vorzugsweise in zwei Teilbereiche, insbesondere legt er einen darüber liegenden Produktbereich fest. Die bevorzugte Befestigung des mindestens einen U-förmigen Rohrs an einem mit dem Reaktormantel verbundenen Boden erlaubt thermische Längenänderungen des Reaktors und der U-förmigen Rohre unabhängig voneinander, da das U-Rohrbündel nur über den Boden am Mantel des Reaktors befestigt ist, so dass bei der Konstruktion des Reaktors auf Kompensatoren verzichtet werden kann. Durch die Verbindung der U-förmigen Rohre mit dem Boden an den oberen Enden ihrer Schenkel wird vorteilhafterweise erreicht, dass sich die Rohre entsprechend der Schwerkraft stabilisieren.

Gemäß einer bevorzugten Ausführungsform der vorliegenden Erfindung ist in einem oberen Abschnitt des Reaktors, vorzugsweise nahe der oberen Haube, ein Boden angeordnet, der den Reaktorinnenraum in einen darunter liegenden unteren Teilbereich und einen darüber liegenden oberen Teilbereich einteilt.

Der obere Teilbereich enthält vorzugsweise den Produktbereich, der während des Betriebs des Reaktors hauptsächlich das Produkt Schwefelwasserstoff enthält. Mit dem Produktbereich steht jeweils ein Schenkel der U-förmigen Rohre in offener Verbindung.

Der untere Teilbereich des Reaktors enthält vorzugsweise den Eduktbereich direkt unterhalb des Bodens und darunter eine Schwefelschmelze, in die flüssiger Schwefel aus einer externen Quelle und/oder als Rücklauf eingespeist wird. Die U-förmigen Rohre stehen teilweise in thermischem Kontakt mit der Schwefelschmelze, vorzugsweise sind sie teilweise direkt in der Schwefelschmelze angeordnet, tauchen also in die Schwefelschmelze ein. Somit findet eine Übertragung der bei der exothermen Reaktion zu H₂S freiwerdenden Wärmeenergie über das mindestens eine U-förmige Rohr in die umgebende Schwefelschmelze statt. Die Reaktionswärme wird für eine Verdampfung der darin enthaltenen Schwefels genutzt. Diese Wärmekopplung ermöglicht ein energetisch günstiges Verfahren, bei dem externe Wärmezufuhr erheblich reduziert oder nicht notwendig ist. Gleichzeitig kann eine Überhitzung des Katalysators vermieden werden, wodurch sich die Standzeiten des Katalysators erhöhen.

Für eine gute Übertragung der Wärmeenergie wird vorzugsweise der Wärmewiderstand der Katalysatorschüttung im Reaktionsbereich möglichst gering gehalten. Vorzugsweise wird für die Umsetzung der Edukte zu H₂S eine Vielzahl von Katalysator enthaltenden U-förmigen Rohren bereitgestellt, so dass der jeweilige Weg vom Kern der Katalysatorschüttung zur Wand des Rohrs gering ist. Vorzugsweise liegt ein Verhältnis der Summe der Querschnittsflächen aller Kontaktrohre (bzw. aller Schenkel der U-förmigen Kontaktrohre) bezogen auf die Querschnittsfläche des (vorzugsweise zylindrischen) Reaktorkörpers zwischen 0,05 und 0,9, insbesondere zwischen 0,15 und 0,7, besonders bevorzugt zwischen 0,2 und 0,5, ganz besonders bevorzugt zwischen 0,25 und 0,4.

Damit ein ausreichender thermischer Kontakt für die Wärmeübertragung von dem U-förmigen Rohr in die umgebende Schwefelschmelze besteht, wird angestrebt, dass 20 bis 100 % der äußeren Mantelfläche eines jeweiligen U-förmigen Rohres entlang des den Katalysator enthaltenden Reaktionsbereichs in Kontakt mit der Schwefelschmelze steht. Damit die Wärmeübertragung in die Schwefelschmelze gut funktioniert, sollte dort, wo die Reaktion im U-förmigen Rohr stattfindet, die äußere Mantelfläche des U-förmigen Rohrs entlang des den Katalysator enthaltenden Reaktionsbereichs zu mehr als 20 %, bevorzugt zu mehr als 50%, besonders bevorzugt zu mehr als 80% von der Schwefelschmelze umgeben sein. Bei einem zu geringen Füllstand der Schwefelschmelze in dem Reaktor und damit einem zu geringen Kontakt von U-förmigen Rohr und Schwefelschmelze besteht die Gefahr, dass die Reaktionswärme nicht ausreichend abgeführt wird.

In Strömungsrichtung des Eduktgemischs innerhalb des mindestens einen U-förmigen Rohres kann das Eduktgemisch nach dem Eintreten in das U-förmige Rohr zunächst eine Inertschüttung durchströmen, wobei eventuell mitgerissener, in Form von Tröpfchen enthaltener flüssiger Schwefel an dieser lnertschüttung aus dem Eduktgemisch abgeschieden wird. Beispielsweise kann ein Anteil an flüssigem Schwefel in dem gasförmigen Wasserstoff und Schwefel enthaltenden Eduktgemisch von bis zu 100.000 Gew.-ppm vorliegen. Für die Schwefeltropfenabscheidung ist bevorzugt ein Anteil der Inertschüttung, bezogen auf die Gesamtschüttung aus Inertschüttung und Katalysatorschüttung, von 1 bis 30 %, insbesondere von 2 bis 25 %, bevorzugt von 5 bis 20 %, besonders bevorzugt von 8 bis 16 % in dem mindestens einen U-förmigen Rohr vorgesehen. Die Inertschüttung kann aus Körpern beliebiger Gestalt, beispielsweise aus Satteln oder vorzugsweise aus Kugeln, bestehen, welche aus einem geeigneten Material, beispielsweise Zirkonoxid oder vorzugsweise Aluminiumoxid, sind.

In einer bevorzugten Ausführungsform des erfindungsgemäßen Reaktors wird gasförmiger Wasserstoff über eine Zuführeinrichtung in die Schwefelschmelze in den Reaktor eingeleitet und über eine Verteilereinrichtung in der Schwefelschmelze verteilt.

Die Verteilereinrichtung umfasst vorzugsweise eine in dem Reaktor horizontal angeordnete Verteilerplatte und einen sich nach unten erstreckenden Rand. Der unterhalb der Verteilereinrichtung eingeleitete Wasserstoff staut sich unterhalb der Verteilerplatte zu einer Wasserstoffblase in dem Raum auf, der durch den sich nach unten erstreckenden Rand und die Verteilerplatte begrenzt wird.

Die Zuführeinrichtung umfasst vorzugsweise ein in dem Reaktor senkrecht angeordnetes, an beiden Enden offenes Rohr, welches unterhalb der Verteilereinrichtung angeordnet ist und dessen oberes Ende vorzugsweise in den Raum, der von der Verteilerplatte und dem sich nach unten erstreckenden Rand begrenzt wird, hineinragt und besonders bevorzugt in die Wasserstoffblase hineinragt. Durch ein Hineinragen in den Raum unter der Verteilerplatte und insbesondere in die darunter ausgebildete Wasserstoffblase wird in vorteilhafter Weise ein ungleichmäßiger Wasserstoffeintrag in die Schwefelschmelze vermieden.

In das senkrechte Rohr der Zuführeinrichtung mündet vorzugsweise seitlich ein schräg verlaufendes Einleitrohr, durch welches der Wasserstoff von außerhalb des Reaktors eingeleitet wird. Die Zuführeinrichtung ist vorteilhafter Weise so gestaltet, dass in das senkrecht angeordnete Rohr eintretender Schwefel frei nach unten abfließen kann, ohne die Zuführeinrichtung für den Wasserstoff zu verstopfen. Der Wasserstoff steigt in dem senkrecht angeordneten Rohr nach oben und sammelt sich unterhalb der Verteilereinrichtung.

Die Verteilereinrichtung umfasst vorzugsweise eine in dem Reaktor horizontal angeordnete Verteilerplatte (vorzugsweise mit Durchgangsöffnungen) und einen sich nach unten erstreckenden Rand. Die vorzugsweise ebene Verteilerplatte erstreckt sich vorzugsweise nahezu über die gesamte Querschnittsfläche des Reaktors, wobei zwischen Reaktormantel und Verteilereinrichtung ein Spalt verbleibt. Der Spalt zwischen dem Rand der Verteilereinrichtung und dem Reaktormantel hat vorzugsweise eine Breite zwischen 1 und 50 mm, insbesondere zwischen 2 und 25 mm, besonders bevorzugt zwischen 5 und 10 mm. Die Form der Verteilerplatte richtet sich nach der Geometrie des Reaktors, in welchem sie angeordnet wird. Sie kann beispielsweise kreisförmig oder mehreckig sein oder jede andere beliebige Form aufweisen. Vorzugsweise können am Außenumfang der Verteilerplatte Aussparungen vorgesehen sein, welche Durchführungsöffnungen z.B. für eine Wasserstoffeinleitung, eine Schwefeleinleitung und eine Schwefelrückführung bereitstellen. Somit kann der Spalt zwischen Verteilereinrichtung und Reaktormantel nur eine geringe Breite aufweisen, so dass ein starkes Schwingen der Verteilereinrichtung in dem Reaktor vermieden wird. Der unterhalb der Verteilereinrichtung eingeleitete Wasserstoff staut sich unterhalb dieser Verteilerplatte. zu einer Wasserstoffblase in dem Raum auf, der durch den sich nach unten erstreckenden Rand und der Verteilerplatte begrenzt wird. Vorzugsweise wird die Verteilerplatte in dem Reaktor horizontal angeordnet, so dass die sich unterhalb der Verteilerplatte aufstauende Wasserstoffblase nahezu konstante Höhe aufweist.

Der aufgestaute Wasserstoff wird über den sich nach unten erstreckenden Rand, wenn die Wasserstoffblase eine gewisse Höhe erreicht hat, und/oder durch in der Verteilerplatte vorgesehene Durchgangsöffnungen in der Schwefelschmelze verteilt. Der Wasserstoff aus der Wasserstoffblase kann über den Rand durch einen Spalt zwischen Verteilereinrichtung und Reaktormantel in der Schwefelschmelze verteilt werden. Vorzugsweise ist der Randbereich der Verteilereinrichtung zackenförmig ausgebildet, wodurch der aufgestaute Wasserstoff in feine Gasblasen verteilt dispergiert werden kann.

In einer bevorzugten Ausführungsform enthält die vorzugsweise in dem Reaktor horizontal angeordnete Verteilerplatte der Verteilereinrichtung Durchgangsöffnungen. Durch die Durchgangsöffnungen in der Verteilerplatte dispergiert der aufgestaute Wasserstoff gleichmäßig verteilt aus der Wasserstoffblase in die über der Verteilerplatte befindliche Schwefelschmelze, wodurch vorteilhaft Schwingungen innerhalb des Reaktors durch eine über den Reaktorquerschnitt gleichmäßige Verteilung des Wasserstoffs vermieden werden. Die Anzahl der Durchgangsöffnungen in der Verteilerplatte richtet sich unter anderem nach dem Volumenstrom des eingeleiteten Wasserstoffs und beträgt vorzugsweise 2 bis 100, insbesondere 4 bis 50, besonders bevorzugt 8 bis 20 pro 100 Norm-m³/h. Die Durchgangsöffnungen können z.B. kreisförmig oder als Schlitze ausgebildet sein, wobei bevorzugte Durchmesser bzw. Schlitzbreiten bei 2 bis 30 mm, bevorzugt 5 bis 20 mm, besonders bevorzugt 7 bis 15 mm liegen. Die Durchgangsöffnungen sind in der Verteilerplatte vorzugsweise regelmäßig angeordnet. Der Flächenanteil der Durchgangsöffnungen, bezogen auf die Fläche der Verteilerplatte, liegt vorzugsweise zwischen 0,001 und 5 %, bevorzugt zwischen 0,02 und 1 %, besonders bevorzugt zwischen 0,08 und 0,5 %.

Um eine gute Durchmischung der Schwefelschmelze durch den aufsteigenden Wasserstoff zu erreichen und somit ein möglichst effizientes Strippen des Schwefels in den aufsteigenden Wasserstoff zu gewährleisten, liegt die Gasgeschwindigkeit des durch die Durchgangsöffnungen dispergierten Wasserstoffs vorzugsweise bei 20 bis 400 m/s, insbesondere 50 bis 350 m/s, bevorzugt 90 bis 300 m/s, besonders bevorzugt 150 bis 250 m/s.

Kommt es insbesondere bei einer Temperaturabsenkung zum Eindringen von Schwefel in die Durchgangsöffnungen, der sich in den Durchgangsöffnungen verfestigt, ist die Wasserstoffverteilung an der Verteilereinrichtung durch die Durchgangsöffnungen gehemmt. Der aufgestaute Wasserstoff kann dann über den Randbereich des sich nach unten erstreckenden Randes in die Schwefelschmelze dispergieren.

Beim einfachen Einleiten von Wasserstoff z.B. über ein senkrechtes Einleitrohr ohne eine derartige Verteilereinrichtung in die Schwefelschmelze kann sich eine inhomogene Wasserstoffverteilung ergeben. In der Nähe des Einleitrohres steigen in der Schwefelschmelze große Blasen von Wasserstoff auf. In anderen Regionen der Schwefelschmelze liegt dann kaum Wasserstoff vor. Dadurch können Schwingungen der U-förmigen Rohre angeregt werden. Die vorzugsweise in dem erfindungsgemäßen Reaktor enthaltene, wie eine nach unten offene Glocke gestaltete Verteilereinrichtung dient daher auch zur Stabilisierung der U-förmigen Rohre des Rohrbündels in dem erfindungsgemäßen Reaktor.

Um eine größere Stabilität der U-förmigen Rohre zu erzielen, kann das mindestens eine U-förmige Rohr nahe seinem unteren bogenförmigen Bereich mit der Verteilereinrichtung verbunden werden, die durch ihre Dimensionierung den Schwingungsbereich des U-förmigen Rohrs bzw. des entsprechenden Rohrbündels in horizontaler Richtung begrenzt. Hierbei ist die Verteilereinrichtung ihrerseits nicht direkt mit dem Reaktormantel des Reaktors verbunden, sondern ist vielmehr indirekt über die Verbindung der U-förmigen Rohre mit dem Boden mit dem Reaktormantel verbunden. Dadurch können Probleme durch Spannungen zwischen Reaktor, U-förmigen Rohren und Verteilereinrichtung, hervorgerufen durch die thermischen Längenänderungen vermieden werden.

In einer Ausführungsform wird die Verteilerplatte mit den jeweiligen Schenkeln des mindestens einen U-förmigen Rohres nahe des unteren Endes des U-förmigen Rohrs verbunden, beispielsweise verschweißt, wobei sich ein Abschnitt des U-förmigen Rohrs, der zumindest einen Teil des bogenförmigen Bereichs umfasst, unterhalb der Verteilerplatte befindet. Da dieser Abschnitt des U-förmigen Rohrs nicht in Kontakt mit der Schwefelschmelze steht, sondern vielmehr in den Bereich der unter der Verteilereinrichtung aufgestauten Wasserstoffblase ragt, enthält das U-förmige Rohr in diesem Abschnitt vorzugsweise keine Katalysatorschüttung. Somit findet keine Umsetzung zu H₂S statt und es entsteht keine exotherme abzuführende Reaktionswärme. Innerhalb des mindestens einen U-förmigen Rohres können Unterteilungen vorgesehen sein, die den Bereich der Katalysatorschüttung von dem Bereich ohne Schüttung trennt, wobei die Unterteilungen jedoch für Edukte und Produkte der H₂S-Herstellung durchlässig sein müssen.

Bei der vorliegenden Erfindung sind vorzugsweise eine Zuführ- und eine Verteilereinrichtung für gasförmigen Wasserstoff in einem unteren Abschnitt des Reaktors, z.B. nahe der unteren Haube, vorgesehen. Der mittels der Zuführeinrichtung in die Schwefelschmelze eingeleitete Wasserstoff steigt in Form von durch die Verteilereinrichtung verteilten Gasblasen durch die Schmelze, wodurch Schwefel aus der Schmelze gestrippt wird, und staut sich (z.B. unterhalb eines oberen Bodens des Reaktors) in dem Eduktbereich des Reaktors als Eduktgemisch auf, das über eine Phasengrenze mit der Schwefelschmelze in Kontakt steht. Das Eduktgemisch enthält gasförmigen Wasserstoff und Schwefel in einem Molverhältnis, welches sich durch die herrschenden Verfahrensparameter, d.h. Temperatur, Druck und die Menge an eingeleitetem Wasserstoff, dem Verdampfungsgleichgewicht des Schwefels entsprechend, einstellt. Hierbei kann durch die Wahl der Verfahrensparameter ein Überschuss an Wasserstoff oder Schwefel oder auch ein der Reaktionsstöchiometrie entsprechendes Molverhältnis eingestellt werden, je nach der gewünschten Reaktionsführung der Umsetzung zu H₂S. Bevorzugt wird bei der vorliegenden Erfindung ein Überschuss an Schwefel eingestellt, um einen möglichst vollständigen Umsatz von Wasserstoff mit Schwefel zu H₂S zu erzielen. Vorzugsweise beträgt dabei der Schwefelüberschuss pro Kilogramm erzeugtem H₂S zwischen 0,2 und 3,0, insbesondere zwischen 0,4 und 2,2, bevorzugt zwischen 0,6 und 1,6, besonders bevorzugt zwischen 0,9 und 1,2.

Gegenstand der Erfindung ist auch ein Verfahren zur kontinuierlichen Herstellung von H₂S durch Umsetzung eines Eduktgemischs, welches im Wesentlichen gasförmigen Schwefel und Wasserstoff enthält, an einem Katalysator, umfassend ein Bereitstellen einer Schwefelschmelze zumindest in einem unteren Teil eines Reaktors, in welche gasförmiger Wasserstoff eingeleitet wird. Bei dem Verfahren wird das Eduktgemisch aus einem Eduktbereich in einen Schenkel mindestens eines U-förmigen Rohres durch mindestens eine oberhalb der Schwefelschmelze angeordnete Eintrittsöffnung eingeleitet, entlang eines Strömungsweges durch das mindestens eine U-förmige Rohr, welches teilweise in Kontakt mit der Schwefelschmelze steht, durchgeleitet und an einem im Strömungsweg in einem Reaktionsbereich angeordneten Katalysator umgesetzt. Ein Produkt wird aus mindestens einer Austrittsöffnung in einem anderen Schenkel des U-förmigen Rohres in einen (vorzugsweise von dem Eduktbereich getrennten) Produktbereich geleitet. Vorzugsweise wird das erfindungsgemäße Verfahren in dem bereits beschriebenen erfindungsgemäßen Reaktor durchgeführt.

Das erfindungsgemäße Verfahren zur Herstellung von H₂S wird bevorzugt bei Temperaturen des Eduktgemischs und des den Katalysator enthaltenden Reaktionsbereichs von 300 bis 450°C, bevorzugt von 320 bis 425°C, besonders bevorzugt von 330 bis 400°C durchgeführt, wodurch die Korrosionsbelastung der gewählten Materialien der konstruktiven Elemente gering gehalten wird. Vorzugsweise beträgt die Temperatur der Schwefelschmelze zwischen 300 und 450°C, insbesondere zwischen 320 und 425°C, bevorzugt zwischen 330 und 400°C, besonders bevorzugt zwischen 350 und 360°C. Die Temperatur im Eduktraum über dem Schwefelbad beträgt vorzugsweise zwischen 300 und 450°C, insbesondere zwischen 320 und 425°C, bevorzugt zwischen 330 und 400°C, besonders bevorzugt zwischen 350 und 360°C. Das in den Produktraum aus den U-förmigen Rohren austretende Produktgemisch hat vorzugsweise eine Temperatur zwischen 300 und 450°C, insbesondere zwischen 320 und 425°C, bevorzugt zwischen 330 und 400°C, besonders bevorzugt zwischen 350 und 360°C. Die Drücke im Mantelraum des Reaktors und im Inneren der U-förmigen Rohre betragen vorzugsweise 0,5 bis 10 bar, insbesondere 0,75 bis 5 bar, bevorzugt 1 bis 3 bar und besonders bevorzugt 1,1 bis 1,4 bar absolut.

Der in dem erfindungsgemäßen Verfahren eingeleitete Wasserstoff wird vorzugsweise an einer im unteren Abschnitt des Reaktors vorgesehenen Verteilereinrichtung in die Schwefelschmelze dispergiert. Die Wasserstoffverteilung in die Schwefelschmelze erfolgt aus einer unter der Verteilereinrichtung aufgestauten Wasserstoffblase bevorzugt über eine im Reaktor horizontal angeordnete Verteilerplatte der Verteilereinrichtung durch darin vorgesehene Durchgangsöffnungen und/oder über einen sich von der Verteilerplatte nach unten erstreckenden Rand. Insbesondere bei einer Hemmung des Durchtritts des Wasserstoffs durch Durchgangsöffnungen in der Verteilerplatte, beispielsweise durch darin abgelagerten Schwefel, staut sich die Wasserstoffblase in dem durch die Verteilerplatte und durch den sich nach unten erstreckenden Rand begrenzten Raum auf, so dass Wasserstoff über den Randbereich des sich nach unten erstreckenden Randes in die Schwefelschmelze strömt. Dabei gelangt der Wasserstoff aus der Wasserstoffblase unter der Verteilereinrichtung durch einen Spalt zwischen Verteilereinrichtung und Reaktormantel in die über der Verteilereinrichtung vorhandene Schwefelschmelze. Auf diese Weise ist gewährleistet, dass der Wasserstoff in ausreichender Menge während der kontinuierlichen Herstellung von H₂S in der Schwefelschmelze verteilt wird.

Besonders bevorzugt weist die Verteilereinrichtung in der Verteilerplatte Durchgangsöffnungen auf, durch die Wasserstoff aus einer unterhalb der Verteilerplatte aufgestauten Wasserstoffblase in die über der Verteilerplatte enthaltende Schwefelschmelze dispergiert.

Die Verdampfungsrate des Schwefels wird bei der vorliegenden Erfindung vorzugsweise so eingestellt, dass das Eduktgemisch einen Schwefelüberschuss enthält. Der überschüssige Schwefel wird dann mit dem Produkt aus dem Produktbereich des Reaktors abgeleitet und nachträglich als Schmelze abgeschieden. Dieser flüssige Schwefel kann z.B. über eine in dem oberen Teilbereich des Reaktors angeordnete Sammel-und Ableitkonstruktion, unter anderem umfassend einen Sammelboden und ein davon ausgehendes, in die Schwefelschmelze getauchtes Rücklaufrohr, in die im unteren Teilbereich des Reaktors enthaltene Schwefelschmelze zurückgeführt werden. Vorzugsweise erfolgt eine Kühlung der aus dem Reaktor austretenden H₂S-Gase in einem Wärmetauscher, wobei der überschüssige Schwefel auskondensiert und über die Sammel- und Ableitkonstruktion zurück in die Schwefelschmelze geleitet wird. Als Kühlmedium kann in einem Sekundärkreislauf warmes Druckwasser eingesetzt werden.

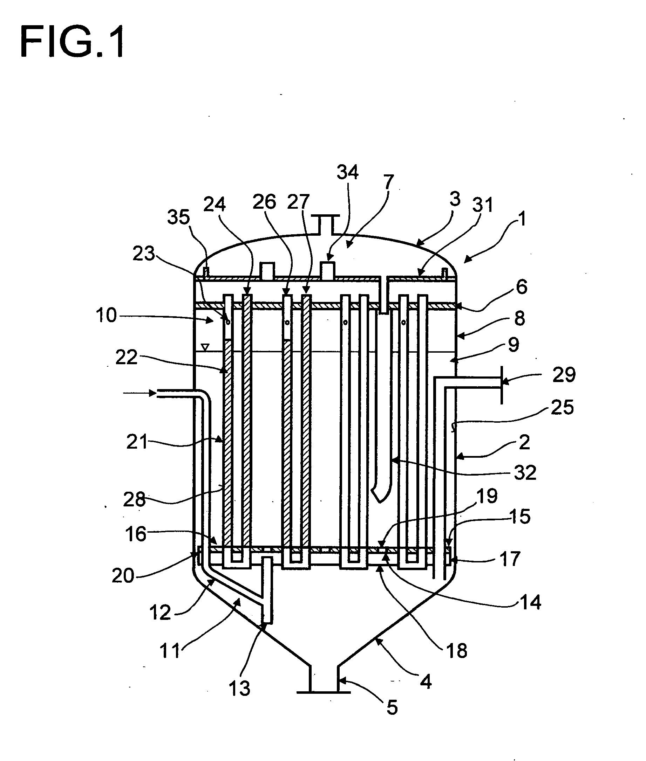

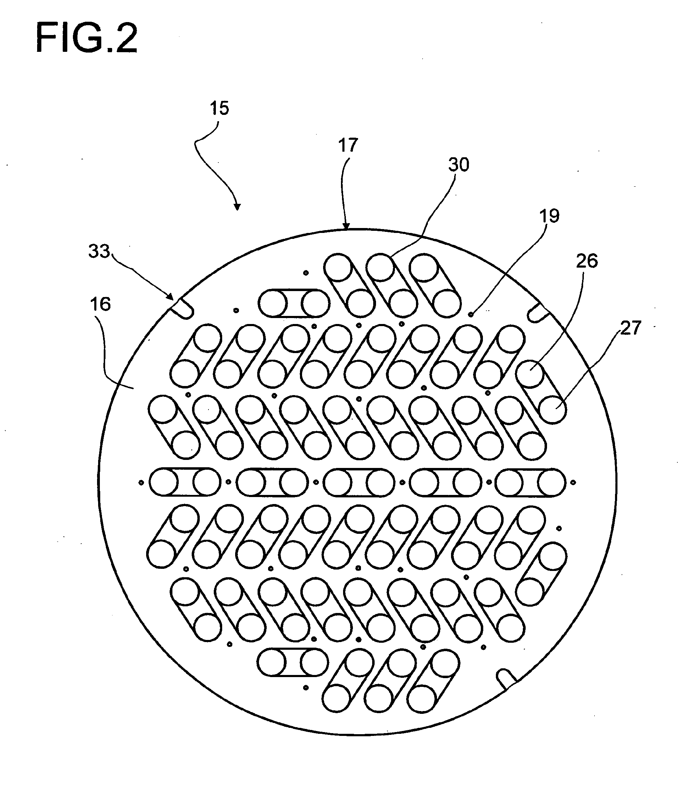

Die vorliegende Erfindung wird anhand des in Figur 1 dargestellten Reaktors und anhand der in Figur 2 dargestellten Verteilereinrichtung näher erläutert.

Figur 1 zeigt schematisch eine bevorzugte Ausführungsform eines erfindungsgemäßen Reaktors in Längsschnittdarstellung.

Der Reaktor 1 ist an beiden Seiten eines zylindrischen Körpers 2 mit Hauben 3, 4 geschlossen. An der oberen Haube 3 kann ein Produkt abgezogen werden. An der unteren Haube 4 befindet sich ein Ablassstutzen 5, um eventuell den Inhalt des Reaktors 1 vollständig abzulassen. In einem oberen Abschnitt des Reaktors 1 ist ein Boden 6 vorgesehen, der einen oberen Teilbereich mit einem Produktbereich 7 von einem unteren Teilbereich 8 abtrennt. Der Boden 6 ist mit einem Reaktormantel 25 des Reaktors 1 verbunden. Der untere Teilbereich 8 ist teilweise mit einer Schwefelschmelze 9 gefüllt, die über eine Phasengrenze mit einem Eduktbereich 10 in Kontakt steht, der nach oben durch den Boden 6 begrenzt wird. Der Eduktbereich 10 enthält hauptsächlich gasförmigen Wasserstoff und Schwefel.

Der Wasserstoff wird über eine Zuführeinrichtung 11 in einen unteren Abschnitt des Reaktors 1, beispielsweise in der unteren Haube 4, in die Schwefelschmelze 9 eingeleitet. Die Zuführeinrichtung 11 umfasst eine schräg verlaufende Leitung 12, die seitlich in ein im Reaktor 1 senkrecht angeordnetes, nach oben und unten offenes Rohr 13 mündet. Das obere Ende des Rohres 13 ragt in einen Raum 14-hinein, der durch eine Verteilereinrichtung 15 begrenzt wird. Die Verteilereinrichtung 15 umfasst eine im Reaktor 1 horizontal angeordnete Verteilerplatte 16 und einen sich nach unten erstreckenden Rand 17, der einen vorzugsweise zackenförmig ausgebildeten Randbereich 18 aufweist. Der über die Zuführeinrichtung 11 eingeleitete Wasserstoff steigt in dem senkrechten Rohr 13 nach oben und staut sich unterhalb der Verteilerplatte 16 zu einer Wasserstoffblase auf. Durch Durchgangsöffnungen 19 in der Verteilerplatte 16 dispergiert der Wasserstoff in die darüber befindliche Schwefelschmelze 9 und steigt innerhalb der Schwefelschmelze 9 in Form von Gasblasen nach oben, wobei Schwefel aus der Schwefelschmelze 9 gestrippt wird. Dadurch bildet sich oberhalb der Schwefelschmelze 9 in dem Eduktbereich 10 ein Eduktgemisch, enthaltend gasförmigen Wasserstoff und Schwefel, aus.

Sind die Durchgangsöffnungen 19 in der Verteilerplatte 16 für den Wasserstoffdurchtritt versperrt, so kann der Wasserstoff auch aus der unterhalb der Verteilerplatte 16 aufgestauten Wasserstoffblase über den Randbereich 18 in einen Spalt 20 zwischen dem Reaktormantel 25 und dem Rand 17 der Verteilereinrichtung 15 in die Schwefelschmelze 9 dispergieren.

Im zylindrischen Körper des Reaktors 1 sind Rohre 21 angeordnet, welche erfindungsgemäß U-förmig ausgebildet sind. Die U-förmigen Rohre 21 sind an ihren beiden Schenkeln 26,27 mit dem Boden 6 verbunden. Die Verbindung der Schenkel 26, 27 mit dem Boden 6 kann durch eine Schweißnaht hergestellt werden. Die U-förmigen Rohre 21 tauchen teilweise in die Schwefelschmelze 9 ein, wodurch die Möglichkeit eines direkten Wärmeaustausches zwischen dem Innenraum der Rohre 21 und der Schwefelschmelze 9 über die äußere Mantelfläche 28 der Rohre 21 gegeben ist. Innerhalb jedes U-förmigen Rohrs 21 ist ein Katalysatorfestbett 22 angeordnet, welches in beiden Schenkeln 26, 27 der U-förmigen Rohre 21 vorgesehen ist.

Wie in Figur 1 gezeigt, ist die Verteilereinrichtung 15 mit den U-förmigen Rohren 21 verbunden, wobei ein Teil und insbesondere der Übergang von einem Schenkel 26 zum zweiten Schenkel 27 der jeweiligen U-förmigen Rohre 21 unterhalb der Verteilerplatte 16 durch den Raum 14 verläuft. Da dieser Abschnitt der U-förmigen Rohre 21 in die aufgestaute Wasserstoffblase ragt und nicht in direktem Kontakt mit der Schwefelschmelze 9 steht, enthält dieser Abschnitt keinen Katalysator. Zwischen der Verteilereinrichtung 15 und dem Reaktormantel 25 ist der Spalt 20 positioniert. Die Verteilereinrichtung 15 ist nicht direkt mit dem Reaktormantel 25 verbunden.

In dem Reaktor 1 läuft die erfindungsgemäße Herstellung von Schwefelwasserstoff wie folgt ab. Ein Eduktgemisch tritt aus dem Eduktbereich 10 durch eine oder mehrere am Umfang eines Schenkels 26 jedes der U-förmigen Rohre 21 angeordnete Eintrittsöffnungen 23 in den Innenraum des einen Schenkels 26 des U-förmigen Rohres 21 ein, durchströmt die darin enthaltene Katalysatorschüttung 22, die durch eine vorgelagerte Inertschüttung ergänzt sein kann und wird entlang des Strömungsweges im Katalysatorfestbett 22 enthaltenden Reaktionsbereich weitgehend zu Schwefelwasserstoff umgesetzt: Das Produkt tritt an dem zweiten Schenkel 27 über mindestens eine Austrittsöffnung 24 in den Produktbereich 7 aus und kann gesammelt und von dort über Haube 3 ausgeleitet werden. Durch den direkten Kontakt der U-förmigen Rohre 21 mit der Schwefelschmelze 9 wird die bei der Umsetzung zu H₂S freiwerdende Reaktionswärme aus dem Katalysatorfestbett 22 in die Schwefelschmelze 9 über die äußere Mantelfläche 28 der U-förmigen Rohre entlang des Reaktionsbereichs abgegeben und für eine Schwefelverdampfung genutzt.

Um die Schwefelschmelze 9 während des Verfahrens in etwa in gleicher Höhe zu halten, werden gasförmiger Wasserstoff und flüssiger Schwefel in entsprechenden Mengen dem Reaktor1 kontinuierlich über die Zuführeinrichtung 11 und eine Schwefeleinleitung 29 zugeführt. Überschüssiger Schwefel, welcher aus dem Produkt als Schmelze abgeschieden wird, gelangt zu einer im oberen Teilbereich des Reaktors 1 angeordneten Sammel- und Ableitkonstruktion. Diese Sammel- und Ableitkonstruktion umfasst einen Sammelboden 31, an dem zum Durchleiten des Produktes aus dem unterhalb des Sammelbodens 31 befindlichen Produktbereich 7 in den darüber befindlichen Produktbereich 7 Einlassstutzen 34 angeordnet sind und einen Rand 35. Der abgeschiedene flüssige Schwefel wird auf einem Sammelboden 31, welcher horizontal in dem Produktbereich 7 des Reaktors 1 angeordnet ist, gesammelt und über ein in die Schwefelschmelze 9 eingetauchtes Rücklaufrohr 32 in die in dem unteren Teilbereich des Reaktors 8 enthaltene Schwefelschmelze 9 rückgeführt. Der Reaktor 1 ist bevorzugt isoliert, so dass der Energieverbrauch möglichst gering ist.

Fig. 2 zeigt eine Aufsicht auf Verteilereinrichtung, die in einer bevorzugten Ausführungsform eines erfindungsgemäßen Reaktors angeordnet ist.

Die Verteilereinrichtung 15 umfasst vorzugsweise eine in dem Reaktor 1 horizontal anzuordnende Verteilerplatte 16 mit Durchgangsöffnungen 19 und einen sich nach unten erstreckenden Rand 17. Die ebene Verteilerplatte 16 erstreckt sich vorzugsweise nahezu über die gesamte Querschnittsfläche des Reaktors 1, wobei zwischen Reaktormantel und Rand 17 ein Spalt verbleibt. Die Form der Verteilerplatte 16 richtet sich - nach der Geometrie des Reaktors, in welchem sie angeordnet wird. Sie ist in dem dargestellten Fall kreisförmig. Der unterhalb der Verteilereinrichtung 15 eingeleitete Wasserstoff staut sich unterhalb dieser Verteilerplatte 16 zu einer Wasserstoffblase in dem Raum auf, der durch den sich nach unten erstreckenden Rand und der Verteilerplatte begrenzt wird. Durch die Durchgangsöffnungen 19 in der Verteilerplatte 16 dispergiert der aufgestaute Wasserstoff gleichmäßig verteilt aus der Wasserstoffblase in die über der Verteilerplatte 16 befindliche Schwefelschmelze.

Verdeutlicht wird in Figur 2 eine mögliche Anordnung der Durchgangsöffnungen 19 in der Verteilerplatte 16, die kreisförmig ausgebildet sind. Ebenfalls sind in der Verteilerplatte 16 Durchführungen 30 dargestellt, durch die in dem erfindungsgemäßen Reaktor die Schenkel 26, 27 der U-förmigen Rohre 21 hindurch treten und beispielsweise durch eine Schweißnaht mit der Verteilerplatte 16 verbunden werden. Am Umfang der Verteilerplatte 16 sind Aussparungen 33 vorgesehen, in denen die Einleitungen für Wasserstoff 12, für Schwefel 29 und das Schwefelrücklaufrohr 32 aufgenommen werden.

Bezuaszeichenliste
- 1: Reaktor
- 2: Reaktorkörper
- 3: Obere Haube
- 4: Untere Haube
- 5: Ablassstutzen
- 6: Boden
- 7: Produktbereich
- 8: Unterer Teilbereich des Reaktors
- 9: Schwefelschmelze
- 10: Eduktbereich
- 11: Zuführeinrichtung für Wasserstoff
- 12: Leitung
- 13: Senkrecht angeordnetes Rohr
- 14: Raum
- 15: Verteilereinrichtung
- 16: Verteilerplatte
- 17: Rand
- 18: Randbereich
- 19: Durchgangsöffnungen
- 20: Spalt
- 21: Rohre
- 22: Katalysatorfestbett
- 23: Eintrittsöffnung
- 24: Austrittsöffnung
- 25: Reaktormantel
- 26: Erster Schenkel
- 27: Zweiter Schenkel
- 28: Äußere Mantelfläche
- 29: Schwefeleinleitung
- 30: Durchführungen
- 31: Sammelboden
- 32: Rücklaufrohr
- 33: Aussparungen
- 34: Einlassstutzen
- 35: Rand

## Patentansprüche

1. Reaktor (1) zur kontinuierlichen Herstellung von H₂S durch Umsetzung eines Eduktgemischs, welches im Wesentlichen gasförmigen Schwefel und Wasserstoff enthält, an einem Katalysator, umfassend eine Schwefelschmelze (9) zumindest in einem unteren Teil (8) des Reaktors, in welche gasförmiger Wasserstoff durch eine Zuführeinrichtung einleitbar ist, **dadurch gekennzeichnet, dass** der Katalysator in mindestens einem U-förmigen Rohr (21) angeordnet ist, welches teilweise in Kontakt mit der Schwefelschmelze (9) steht, wobei das mindestens eine U-förmige Rohr (21) mindestens eine oberhalb der Schwefelschmelze (9) angeordnete Eintrittsöffnung (23) in einem Schenkel (26) aufweist, durch die das Eduktgemisch aus einem Eduktbereich (10) des Reaktors (1) in das U-förmige Rohr (21) eintreten kann, einen Strömungsweg innerhalb des mindestens einen U-förmigen Rohres (21) aufweist, entlang dessen das Eduktgemisch in einem den Katalysator enthaltenden Reaktionsbereich umgesetzt werden kann, und mindestens eine Austrittsöffnung (24) in einem anderen Schenkel (27) aufweist, durch die ein Produkt in einen Produktbereich (7) austreten kann.

2. Reaktor (1) nach Anspruch 1, **dadurch gekennzeichnet, dass** mehr als 20% einer äußeren Mantelfläche (28) des mindestens einen U-förmigen Rohrs (21) entlang des den Katalysator enthaltenden Reaktionsbereichs in Kontakt mit der Schwefelschmelze (9) steht.

3. Reaktor (1) nach einem der Ansprüche 1 oder 2, **dadurch gekennzeichnet, dass** das mindestens eine U-förmige Rohr (21) an einem in dem Reaktor (1) angeordneten Boden (6) montiert ist und der Boden (6) in einem oberen Teil des Reaktors mit einem Reaktormantel (25) des Reaktors (1) verbunden ist.

4. Reaktor (1) nach Anspruch 3, **dadurch gekennzeichnet, dass** der Boden (6) den Eduktbereich (10) des Reaktors (1) nach oben begrenzt.

5. Reaktor (1) nach einem der Ansprüche 1 bis 4, **gekennzeichnet durch** eine Inertschüttung, die in Strömungsrichtung des Eduktgemischs vor dem Katalysator in dem U-förmigen Rohr (21) angeordnet ist.

6. Reaktor (1) nach einem der Ansprüche 1 bis 5, **gekennzeichnet durch** eine Verteilereinrichtung (15) zum Verteilen von gasförmigem Wasserstoff in der Schwefelschmelze, umfassend eine in der Schwefelschmelze (9) angeordnete Verteilerplatte (16) mit einem sich nach unten erstreckenden Rand (17) zum Ausbilden einer Wasserstoffblase unter der Verteilerplatte (16), wobei der Wasserstoff aus der Wasserstoffblase über den sich nach unten erstreckenden Rand (17) in der Schwefelschmelze (9) verteilbar ist.

7. Reaktor (1) nach Anspruch 6, **dadurch gekennzeichnet, dass** die Verteilerplatte (16) Durchgangsöffnungen (19) zum Hindurchleiten von Wasserstoff aus der Wasserstoffblase in die Schwefelschmelze (9) über der Verteilerplatte (16) umfasst.

8. Reaktor (1) nach einem der Ansprüche 6 oder 7, **dadurch gekennzeichnet, dass** die Verteilereinrichtung (15) mit dem mindestens einen U-förmigen Rohr (21) verbunden ist.

9. Reaktor (1) nach einem der Ansprüche 6 bis 8, **dadurch gekennzeichnet, dass** ein Bereich des Strömungsweges in dem mindestens einen U-förmigen Rohr (21), welcher unterhalb der Verteilerplatte (16) liegt, keinen Katalysator enthält.

10. Reaktor (1) nach einem der Ansprüche 1 bis 9, **gekennzeichnet durch** ein Verhältnis der Summe der Querschnittsflächen der Schenkel (26, 27) des mindestens einen U-förmigen Rohrs (21) bezogen auf die Querschnittsfläche des Reaktorkörpers (2) zwischen 0,05 und 0,9.

11. Verfahren zur kontinuierlichen Herstellung von H₂S durch Umsetzung eines Eduktgemischs, welches im Wesentlichen gasförmigen Schwefel und Wasserstoff enthält, an einem Katalysator, umfassend ein Bereitstellen einer Schwefelschmelze (9) zumindest in einem unteren Teil (8) des Reaktors (1), in welche gasförmiger Wasserstoff eingeleitet wird, **gekennzeichnet durch** ein Einleiten des Eduktgemischs aus einem Eduktbereich (10) in einen Schenkel (26) mindestens eines U-förmigen Rohres (21) **durch** mindestens eine oberhalb der Schwefelschmelze (9) angeordnete Eintrittsöffnung (23), ein Leiten des Eduktgemischs entlang eines Strömungsweges **durch** das mindestens eine U-förmige Rohr (21), das teilweise in Kontakt mit der Schwefelschmelze (9) steht, wobei das Eduktgemisch an einem im Strömungsweg in einem Reaktionsbereich angeordneten Katalysator (22) umgesetzt wird und Leiten eines Produktes aus mindestens einer Austrittsöffnung (24) in einem anderen Schenkel (27) des U-förmigen Rohres (21) in einen Produktbereich (7).

12. Verfahren nach Anspruch 11, **gekennzeichnet durch** Verteilen von gasförmigem Wasserstoff in der Schwefelschmelze (9) über eine in der Schwefelschmelze (9) angeordnete Verteilereinrichtung (15), die eine im Reaktor (1) horizontal angeordnete Verteilerplatte (16) mit einem sich nach unten erstreckenden Rand (17) zum Ausbilden einer Wasserstoffblase unter der Verteilerplatte (16) der Verteilereinrichtung (15) umfasst, wobei der Wasserstoff aus der Wasserstoffblase durch die Verteilereinrichtung in der Schwefelschmelze (9) verteilt wird.

13. Verfahren nach Anspruch 12, **gekennzeichnet durch** Verteilen von gasförmigem Wasserstoff in der Schwefelschmelze (9) über die in der Schwefelschmelze (9) angeordnete Verteilereinrichtung (15), die eine im Reaktor (1) horizontal angeordnete Verteilerplatte (16) mit Durchgangsöffnungen (19) zum Hindurchleiten von Wasserstoff aus der Wasserstoffblase in die Schwefelschmelze (9) über der Verteilerplatte (16) umfasst.

## Claims

1. A reactor (1) for continuously preparing H₂S by converting a reactant mixture which comprises essentially gaseous sulfur and hydrogen over a catalyst, comprising a sulfur melt (9) at least in a lower part (8) of the reactor, into which gaseous hydrogen can be passed through a feed device, wherein the catalyst is arranged in at least one U-shaped tube (21) which is partly in contact with the sulfur melt (9), the at least one U-shaped tube (21) having at least one entry orifice (23) in a limb (26) arranged above the sulfur melt (9), through which the reactant mixture can enter the U-shaped tube (21) from a reactant region (10) of the reactor (1), having a flow path within the at least one U-shaped tube (21), along which the reactant mixture can be converted in a reaction region comprising the catalyst, and having at least one exit orifice (24) in another limb (27) through which a product can exit into a product region (7).

2. The reactor (1) according to claim 1, wherein more than 20% of an outer jacket surface (28) of the at least one U-shaped tube (21), along the reaction region comprising the catalyst, is in contact with the sulfur melt (9).

3. The reactor (1) according to either of claims 1 and 2, wherein the at least one U-shaped tube (21) is mounted on a plate (6) arranged in the reactor (1) and the plate (6) in an upper part of the reactor is connected to a reactor jacket (25) of the reactor (1).

4. The reactor (1) according to claim 3, wherein the plate (6) borders the reactant region (10) of the reactor (1 ) at the top.

5. The reactor (1) according to any of claims 1 to 4, **characterized by** an inert bed which is arranged upstream of the catalyst in flow direction of the reactant mixture in the U-shaped tube (21).

6. The reactor (1) according to any of claims 1 to 5, **characterized by** a distributor device (15) for distributing gaseous hydrogen in the sulfur melt, comprising a distributor plate (16) which is arranged in the sulfur melt (9) and has an edge (17) extending downward to form a hydrogen bubble below the distributor plate (16), the hydrogen from the hydrogen bubble being distributable in the sulfur melt (9) via the edge (17) extending downward.

7. The reactor (1) according to claim 6, wherein the distributor plate (16) comprises passage orifices (19) for passing hydrogen out of the hydrogen bubble into the sulfur melt (9) via the distributor plate (16).

8. The reactor (1) according to either of claims 6 and 7, wherein the distributor device (15) is connected to the at least one U-shaped tube (21).

9. The reactor (1) according to any of claims 6 to 8, wherein a region of the flow path in the at least one U-shaped tube (21) which is below the distributor plate (16) does not comprise any catalyst.

10. The reactor (1) according to any of claims 1 to 9, **characterized by** a ratio of the sum of the cross-sectional areas of the limbs (26, 27) of the at least one U-shaped tube (21) based on the cross-sectional area of the reactor body (2) of between 0.05 and 0.9.

11. A process for continuously preparing H₂S by converting a reactant mixture which comprises essentially gaseous sulfur and hydrogen over a catalyst, comprising provision of a sulfur melt (9) at least in a lower part (8) of the reactor (1), into which gaseous hydrogen is introduced, **characterized by** introduction of the reactant mixture from a reactant region (10) into a limb (26) of at least one U-shaped tube (21) through at least one entry orifice (23) arranged above the sulfur melt (9), passage of the reactant mixture along a flow path through the at least one U-shaped tube (21), which is partly in contact with the sulfur melt (9), the reactant mixture being converted over a catalyst (22) arranged in the flow path in one reaction region, and passage of a product out of at least one exit orifice (24) in another limb (27) of the U-shaped tube (21) into a product region (7).

12. The process according to claim 11, **characterized by** distribution of gaseous hydrogen in the sulfur melt (9) via a distributor device (15) arranged in the sulfur melt (9), which comprises a distributor plate (16) arranged horizontally in the reactor (1) with an edge (17) extending downward to form a hydrogen bubble below the distributor plate (16) of the distributor device (15), the hydrogen from the hydrogen bubble being distributed in the sulfur melt (9) by the distributor device.

13. The process according to claim 12, **characterized by** distribution of gaseous hydrogen in the sulfur melt (9) via the distributor device (15) arranged in the sulfur melt (19), which comprises a distributor plate (16) with passage orifices (19) arranged horizontally in the reactor (1) for passing hydrogen out of the hydrogen bubble into the sulfur melt (9) via the distributor plate (16).

## Revendications

1. Réacteur (1) de préparation en continu de H₂S par conversion d'un mélange de réactifs qui contient essentiellement du soufre gazeux et de l'hydrogène sur un catalyseur, qui comporte du soufre fondu (9) au moins dans une partie inférieure (8) du réacteur et dans lequel de l'hydrogène gazeux peut être introduit par un dispositif d'amenée,
**caractérisé en ce que**
le catalyseur est disposé dans au moins un tube (21) en forme de U qui est partiellement en contact avec le soufre fondu (9),
**en ce que** le ou les tubes (21) en forme de U présentent au moins une ouverture d'entrée (23) disposée au-dessus du soufre fondu (9) dans une branche (26) et par laquelle le mélange de réactifs provenant d'une zone (10) à réactifs du réacteur (1) peut pénétrer dans le tube (21) en forme de U, un parcours d'écoulement située à l'intérieur du ou des tubes (21) en forme de U et le long duquel le mélange de réactifs peut être converti dans une zone de réaction qui contient le catalyseur, et au moins une ouverture de sortie (24) prévue dans une autre branche (27) et par laquelle le produit présent dans une zone (7) à produit peut sortir.

2. Réacteur (1) selon la revendication 1, **caractérisé en ce que** plus de 20 % d'une surface d'enveloppe extérieure (28) du ou des tubes (21) en forme de U est en contact avec le soufre fondu (9) le long de la zone de réaction qui contient le catalyseur.

3. Réacteur (1) selon l'une des revendications 1 ou 2, **caractérisé en ce que** le ou les tubes (21) en forme de U sont montés sur un fond (6) disposé dans le réacteur (1) et **en ce que** dans une partie supérieure du réacteur, le fond (6) est relié à une enveloppe (25) du réacteur (1).

4. Réacteur (1) selon la revendication 3, **caractérisé en ce que** le fond (6) délimite vers le haut la zone (10) à réactifs du réacteur (1).

5. Réacteur (1) selon l'une des revendications 1 à 4, **caractérisé par** une garniture inerte en vrac qui est disposée dans le tube (21) en forme de U en amont du catalyseur dans la direction d'écoulement du mélange de réactifs.

6. Réacteur (1) selon l'une des revendications 1 à 5, **caractérisé par** un dispositif de répartition (15) qui répartit l'hydrogène gazeux dans le soufre fondu et qui comprend une plaque de répartition (16) disposée dans le soufre fondu (9) et dotée d'un bord (17) qui s'étend vers le bas pour former une bulle d'hydrogène en dessous de la plaque de répartition (16), l'hydrogène provenant de la bulle d'hydrogène pouvant être réparti dans le soufre fondu (9) par le bord (17) qui s'étend vers le bas.

7. Réacteur (1) selon la revendication 6, **caractérisé en ce que** la plaque de répartition (16) comprend des perforations (19) qui permettent le passage de l'hydrogène depuis la bulle d'hydrogène jusque dans le soufre fondu (9) par l'intermédiaire de la plaque de répartition (16).

8. Réacteur (1) selon l'une des revendications 6 ou 7, **caractérisé en ce que** le dispositif de répartition (15) est relié à au moins un tube (21) en forme de U.

9. Réacteur (1) selon l'une des revendications 6 à 8, **caractérisé en ce que** dans le ou les tubes (21) en forme de U, une partie du parcours d'écoulement située en dessous de la plaque de répartition (16) ne contient pas de catalyseur.

10. Réacteur (1) selon l'une des revendications 1 à 9, **caractérisé en ce que** le rapport entre la somme de l'aire des sections transversales des branches (26, 27) du ou des tubes (21) en forme de U et de l'aire de la section transversale du corps (2) du réacteur est compris entre 0,05 et 0,9.

11. Procédé de préparation de H₂S en continu par conversion d'un mélange de réactifs qui contient du soufre essentiellement gazeux et de l'hydrogène sur un catalyseur, le procédé comprenant le placement de soufre fondu (9) au moins dans une partie inférieure (8) du réacteur (1), de l'hydrogène gazeux étant introduit dans le soufre fondu,
**caractérisé par** les étapes qui consistent à
introduire le mélange de réactifs qui provient d'une zone (10) à réactifs dans une branche (26) d'au moins un tube (21) en forme de U par au moins une ouverture d'entrée (23) disposée au-dessus du soufre fondu (9), faire passer le mélange de réactifs le long d'un parcours d'écoulement dans le ou les tubes (21) en forme de U partiellement en contact avec le soufre fondu (9), le mélange de réactifs étant converti sur un catalyseur (22) disposé dans une zone de réaction du parcours d'écoulement, et faire passer un produit provenant d'au moins une ouverture de sortie (24) ménagée dans une autre branche (27) du tube (21) en forme de U jusque dans une zone (7) à produit.

12. Procédé selon la revendication 11, **caractérisé par** la répartition de l'hydrogène gazeux dans le soufre fondu (9) par l'intermédiaire d'un dispositif de répartition (15) disposé dans le soufre fondu (9) et qui comprend une plaque de répartition (16) disposée à l'horizontale dans le réacteur (1) et dotée d'un bord (17) qui s'étend vers le bas pour former une bulle d'hydrogène en dessous de la plaque de répartition (16) du dispositif de répartition (15), l'hydrogène provenant de la bulle d'hydrogène étant réparti dans le soufre fondu (9) par le dispositif de répartition.

13. Procédé selon la revendication 12, **caractérisé par** la répartition d'hydrogène gazeux dans le soufre fondu (9) par l'intermédiaire du dispositif de répartition (15) disposé dans le soufre fondu (9), le dispositif de répartition comportant une plaque de répartition (16) disposée à l'horizontale dans le réacteur (1) et dotée de perforations (19) qui permettent le passage d'hydrogène depuis la bulle d'hydrogène jusque dans le soufre fondu (9) par l'intermédiaire de la plaque de répartition (16).
